# EUROPEAN PATENT SPECIFICATION

(11) **EP 3 992 120 B1**
(45) Date of publication and mention of the grant of the patent: **02.10.2024**
(21) Application number: 21204971.2
(22) Date of filing: 27.10.2021
(51) Int. Cl.: B65G 47/244

(54) **A CONVEYING DEVICE FOR ADVANCING AND REORIENTING TRAYS, AND A METHOD OF OPERATING THE CONVEYING DEVICE**
FÖRDERVORRICHTUNG ZUM FÖRDERN UND NEUAUSRICHTEN VON SCHALEN UND VERFAHREN ZUM BETRIEB DER FÖRDERVORRICHTUNG
DISPOSITIF DE TRANSPORT PERMETTANT DE FAIRE AVANCER OU DE RÉORIENTER DES PLATEAUX, ET PROCÉDÉ DE FONCTIONNEMENT DU DISPOSITIF DE TRANSPORT

(30) Priority: 27.10.2020 DK PA202070713
(43) Date of publication of application: 04.05.2022
(73) Proprietor: QUPAQ ApS, 9700 Brønderslev (DK)
(72) Inventor: PETERSEN, Erik B., 9760 Vrå (DK)
(74) Representative: Patrade A/S

(56) References cited:
- EP-A1- 2 842 878
- US-A- 6 151 867

## Description

The present invention concerns a conveying device for advancing and reorienting trays comprising a bottom connected with an upstanding peripheral side wall with an outwardly projecting peripheral edge.

Such trays are typically used in the food industry where they are filled with a food product, after which the trays are provided with a lid and subsequently delivered to a point-of-sale.

Before and/or after the trays are filled with the food product they are conveyed one after another by high speed conveyors through the food processing and filling facility, and must at any time be properly aligned with all relevant apparatuses, such as other conveyors delivering the food product into the trays or apparatuses applying a lid to the trays after the trays are filled. It goes without saying that a correct alignment of the trays is critical, and that due to the high volume of trays alignment of the individual trays must also be carried out in the shortest possible time, without interrupting the steady flow of trays through the facility.

EP 3 326 939 discloses a device as defined in the introductory portion of claim 1.

The invention aims at providing a novel conveying device, particularly useful in a facility as discussed above, where trays can be turned for proper alignment over a short conveyor length, with the conveyor running continuously and preferably at constant speed. A turning as referred to may eg. involve a tray being turned so that its longer side faces forward instead of its shorter side.

In view of this object, the conveying device includes a) a conveyor for continuously advancing the trays one after another, with the bottom of each tray being supported by the conveyor, b) a reorienting device arranged above the conveyor, for turning the trays, the reorienting device comprising a lower clamping part and an upper clamping part, a gap of adjustable gap width between the upper and lower clamping parts being at a level above the conveyor, the upper and lower clamping parts being arranged to receive in the gap a length of the peripheral edge of each tray advanced to the reorienting device by the conveyor at that level, the reorienting device carrying out the turning by a joint rotation about a common axis of the upper and lower clamping parts, simultaneously with the received length of the peripheral edge temporarily being clamped in the gap by adjustment of the gap width, the reorienting device configured to release the clamping of the received length of the peripheral edge by adjustment of the gap width after completion of the joint rotation about the common axis.

Further embodiments are defined in the dependent claims, reciting i.a. drives for providing the clamping and rotation.

### Brief description of the drawings

Fig. 1 is a perspective view of a conveying device of the invention, including a conveyor and a reorienting device
Fig. 2 is a top view of the device of fig. 1,
Figs. 3a and 3b are cross-sectional views along line A-A shown in fig. 2, illustrating the reorienting device in two different configurations,
Fig. 4 is an exploded view of the various components of the reorienting device, and
Fig. 5 is a view similar to fig. 2 showing for simplicity in one drawing how trays of different size may be seized by the reorienting device.

### Detailed description

The invention will now be explained in more detail below by reference to a presently preferred embodiment.

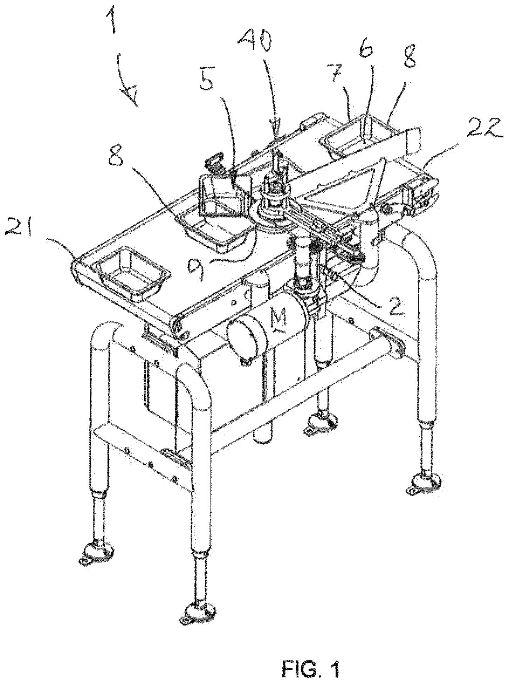

Fig. 1 shows a conveying device 1 of the present invention, used for advancing and reorienting a sequence of trays 5.

Each tray 5 is of the type that comprises a bottom 6 connected with an upstanding peripheral side wall 7 with an outwardly projecting peripheral flange/edge 8 which may have a flat upper face and a flat lower face, the flat upper face being suitable for securing by heat welding a plastic foil lid (not shown) to the tray 5. Alternatively, the lower face of the peripheral edge 8 may have a small recess for snap attachment of a lid to the tray 5.

The side wall 7 may extend perpendicularly from the bottom 6 or, as shown, outwards at some angle to the bottom 6. The width of the peripheral edge 8, i.e. its extension outwards from the side wall 7, may by way of example be in the order of 2mm-15mm, and its thickness may by way of example be in the order of 1mm-10mm. The trays 5 may eg. be of a plastic, cardboard or aluminium material and may, by way of example, be of a rectangular shape.

Such trays 5 are typically used in the food industry, and may be filled with a food product at a downstream filling station or may already have been filled with a food product (not shown) at an upstream filling station.

The conveying device 1 includes a continuously moving conveyor 20, shown as a belt conveyor, running preferably at constant speed and having a upstream end 22 and a downstream end 21 and supporting the bottom 6 of the trays 5, with the aforementioned outwardly projecting peripheral edge 8 being at a certain level above the conveyor 20.

The trays 5 are advanced one after another by the conveyor 20 to a reorienting device 40, to be discussed further below, which is arranged above the conveyor 20 and which is configured to seize and temporarily hold on to a short length of the peripheral edge 8 of each tray 5, typically near a corner 9 of the tray 5, and then to rotate, thereby turning the tray 5 by a selected angle up to a point where the peripheral edge 8 is then released. In fig. 1 three positions of the same tray 5 that it assumes while being turned are shown; as seen, the tray 5 is turned by about 90° such that its long side now faces forward.

As discussed above, turning of the trays 5 by a selected angle may be desirable for many reasons, such as to correctly align the trays 5 with a downstream machine applying lids to the trays 5, or to correctly align the trays 5 with a downstream machine that fills a product into the trays 5. It is noted that the invention may also find use for reorienting trays 5 of the aforementioned type onto which a lid has been fixed to the peripheral edge 8, as long as the peripheral edge 8 of the tray 5 is at least indirectly engageable by the reorienting device 40. The release of the trays 5 may eg. be controlled by a timer/encoder.

The rotation of the reorienting device 40 may be brought about by a motor M, or alternatively as a result of frictional forces between the bottom 8 of the trays 5 and the moving conveyor 20 pulling the tray 5 towards the downstream end 21 of the continuously moving conveyor 20 while being held near a corner 9 by the reorienting device 40.

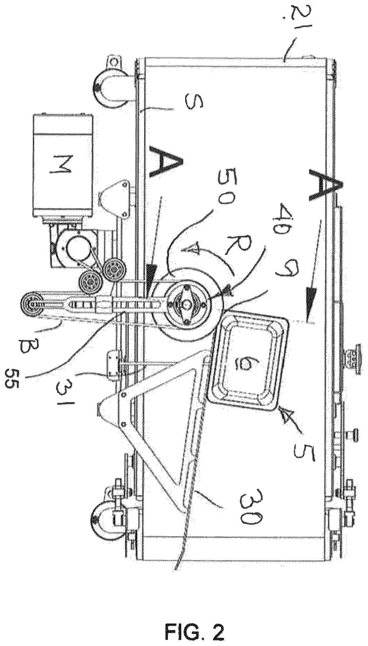

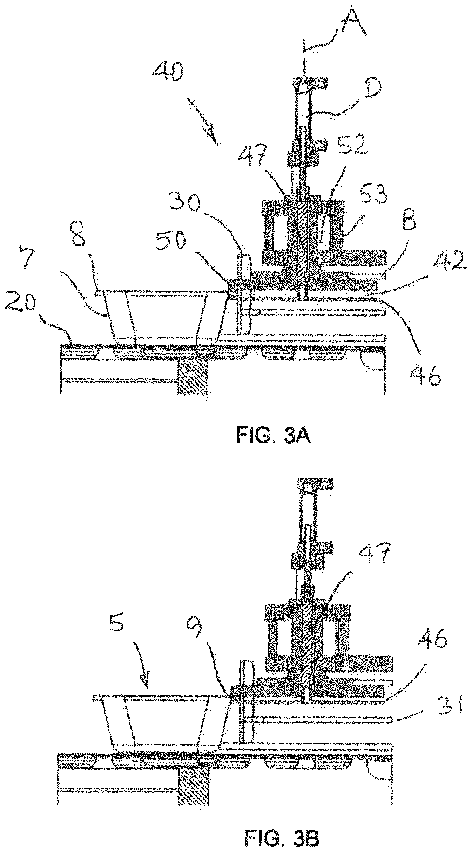

Turning now to fig. 2, which shows the conveying device 1 seen from above, shown is a tray 5 at the moment it has reached the reorienting device 40, advanced thereto by the conveyor 20 and guided by an optional guiding plate 30. The position, such as its angle relative to the sides of the conveyor 20 and its distance from the sides of the conveyor 20, of the guiding plate 30 may be varied as necessary by an arm 31, such as in accordance with the dimensions of the trays 5. At the moment shown in fig. 2 a length of the peripheral edge 8 has entered a gap 42 defined by the reorienting device 40 and being at a level aligned with the level above the conveyor of the peripheral edge 8, as shown in fig. 3a, which is a cross-sectional view identified by line A-A in fig. 2.

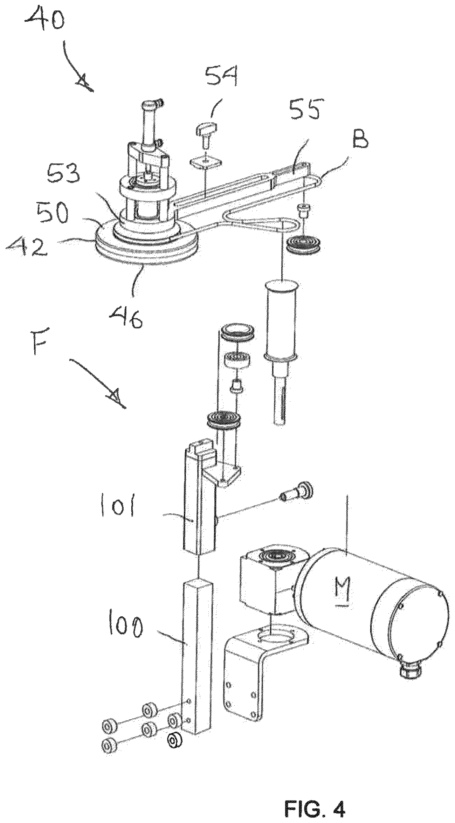

More specifically, the reorienting device 40 that is arranged above the conveyor 20 comprises a lower disc-shaped clamping part 46 and an upper disc-shaped clamping part 50 that each have a clamping face for pressing against the lower and upper face, respectively, of the length of the edge 8. The aforementioned gap 42 has a gap width defined as the distance between the opposed clamping faces of the upper and lower clamping parts 46, 50. The gap width is adjustable to provide for the aforementioned temporary holding on to a length of the peripheral edge 8 that has entered the gap 42. In the shown embodiment the upper clamping part 50 carries the lower clamping part 46 by having a tubular structure 52 receiving a pin 47 attached to the lower clamping part 46; the tubular structure 52 is such that the pin 47 may move a pre-set distance along the length thereof, without permitting relative rotation of the pin 47 with respect to the tubular structure 52. A further structure 53 carries the upper clamping part 50 and provides a bearing allowing the upper clamping part 50 together with the lower clamping part 46 to rotate about a common axis A relative to the further structure 53; as explained below this rotation may be brought about by motor M shown in fig. 1 and also in fig. 4.

Once a desired length of the peripheral edge 8 has entered the gap 42, as determined by a sensor, a drive D, which is carried by the tubular structure 52 and which may eg. be an electromagnetic, pneumatic or hydraulic drive acting on the aforementioned pin 47, is activated to raise the lower clamping part 46, thereby adjusting/reducing the gap 42 width, i.e. the distance between the two clamping parts 46, 50, to a certain minimum value whereby a clamping force is applied onto the edge 8 by the clamping parts 46, 50 pressing against the upper and lower face, respectively, of the edge 8; this configuration is shown in fig. 3b. Simultaneously the reorienting device 40 is activated to rotate, namely to carry out a joint rotation about the common axis A of the upper and lower clamping parts 46, 50. When a pre-set rotation about the axis A, such as by 90°, has been completed the reorienting device 40 releases the received length of the peripheral edge 8 by readjustment of the gap width by controlling the drive D. The released and now turned tray 5 is then advanced forward to the downstream end 21 by the conveyor 20. Completion of the rotation may be determined by the motor M having rotated in predetermined number of steps or, if no motor is used, by sensors registering rotation of the upper clamping part 50 relative to the aforementioned further structure 53. The rotation about the axis A is in the direction shown by arrow R in fig. 2, to turn the tray 5 forward towards the downstream end 21 of the conveyor 20. By way of example only, the drive D may be configured to vary the gap width between 1mm, corresponding to a typical edge 8 thickness, and 10mm, where in the latter case when the clamping structures 46, 50 are moved fully apart.

Fig. 4 shows a frame F supporting the reorienting device 40 and configured for adjustable positioning of the level of the gap 42 above the conveyor 20, in accordance with the general height of the trays 5, such that the reorienting device 40 remains aligned with the peripheral edge 8 where the latter is higher above the conveyor 20. This positioning may by way of example be by means of telescoping bars 100, 101. Often, where the trays 5 are higher the thickness of the peripheral edge 8 remains the same and so there is no need to change the configuration of the drive D.

The reach of the reorienting device 40 across the conveyor 20 from the side S is preferably also adjustable by the further structure 53 being connected to an elongated bar 55 slidably connected with an upper end of one of the telescoping bars 101 by a set screw 54 so that the position where the reorienting device 40 meets the trays 5 can be varied, which may be relevant where the trays 5 enter the upstream end 22 of the conveyor 20 very close to a side S of the conveyor 20. Fig. 4 also shows a belt drive B with an appropriate number of loops connecting the motor M with the upper clamping part 50.

As may be understood, the aforementioned guiding plate 30 may be useful in aligning the edge 8 with gap 42 such that the edge 8 is advanced by the conveyor 20 directly into the gap 42. Preferably, a sensor is arranged along the length of the conveyor 20 for determining the position of trays 5 moving along the conveyor 20 and communicating with a controller 2 that is programmed to activate the reorienting device 40 to turn the trays 5 by a set angle about the axis A and to then release the trays 5 by adjustment of said gap width, i.e. by moving the clamping parts 46, 50 apart. Controlling may be as follows: A first sensor registers a tray 5 approaching the reorienting device 40; this triggers a timer determining when the clamping parts 46, 50 are to be brought into the clamping configuration shown in fig. 3b. Reaching the clamping configuration triggers another timer which decides when the tray is released, with due regard to the speed of rotation about axis A brought about by motor M.

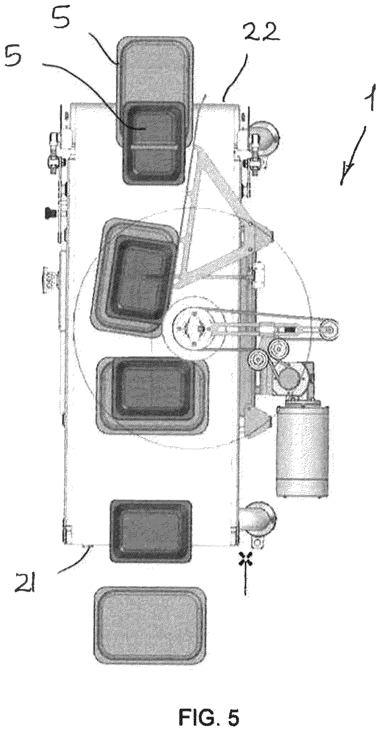

It is noted that disc-shaped clamping parts 46, 50 have been found capable of providing a sufficient clamping force on the trays 5 to carry out the turning even though the contact area between the length of the edge 8 received in the gap 42 and the clamping parts 46, 50 may be very small. Where a higher contact area is necessary, i.e. where a longer length of the edge 8 needs to be engaged by the clamping parts 46, 50, this may obviously be achieved by using clamping parts 46, 50 that are not disc-shaped but eg. polygonal when viewed from above. It is also noted that in some cases if may be desirable to engage the trays 5 not near a tray corner 9 as discussed above, but further away from the corner 9. Fig. 5 shows how for small trays 5 the trays 5 may be engaged close to the corner 9 while for larger size trays 5 the trays are engaged farther away from the corner; this may ensure that irrespectively of the size of the trays 5 the trays will in any event be delivered downstream with their centre lines coincident.

## Claims

1. A conveying device (1) for advancing and reorienting trays (5), said trays (5) each comprising a bottom (6) connected with an upstanding peripheral side wall (7) with an outwardly projecting peripheral edge (8), the conveying device (1) including:
a) a conveyor (20) for continuously advancing said trays (5) one after another, with said bottom (6) of each tray (5) being supported by said conveyor (20),
b) a reorienting device (40) arranged above said conveyor (20), for turning said trays (5), **characterised in**
said reorienting device (40) comprising a lower clamping part (46) and an upper clamping part (50),
- a gap (42) of adjustable gap width between said upper and lower clamping parts (46, 50) being at a level above said conveyor (20),
- said upper and lower clamping parts (46,50) being arranged to receive in said gap (42) a length of said peripheral edge (8) of each tray (5) advanced to said reorienting device (40) by said conveyor (20),
said reorienting device (40) carrying out said turning by a joint rotation about a common axis (A) of said upper and lower clamping parts (46, 50), simultaneously with said received length of said peripheral edge (8) temporarily being clamped in said gap (42) by adjustment of said gap width,
said reorienting device (40) being configured to release said clamping of said received length of said peripheral edge (8) by adjustment of said gap width after said joint rotation about said common axis (A).

2. The conveying device (1) of claim 1, said conveyor (20) being configured to move at a constant speed.

3. The conveying device (1) of claim 1 or 2, said conveyor (20) being a belt conveyor having a first end (22) upstream of said reorienting device (40) and a second end (21) downstream of said reorienting device (40).

4. The conveying device (1) of any of the previous claims, including a frame (F) supporting said reorienting device (40), and configured for adjustable positioning of said level of said gap (42) above said conveyor (20) and/or for adjustable positioning of said gap (42) in a direction transverse to said conveyor (20).

5. The conveying device (1) of any of the previous claims, including a motor (M) for providing said joint rotation.

6. The conveying device (1) of any of the previous claims, including a drive (D) by which one or both of said clamping parts (46, 50) is/are movable along said axis (A) of joint rotation of said clamping parts (46, 50), for said adjustment of said gap width before said joint rotation is initiated.

7. The conveying device (1) of any of the previous claims, wherein said upper clamping part (50) carries said lower clamping part (46) by having a tubular structure (52) receiving a pin (47) attached to the lower clamping part (46), said tubular structure (52) allowing said pin (47) to move only a pre-set distance along the length thereof, preferably without permitting relative rotation of said pin (47) with respect to said tubular structure (52), and/or wherein a further structure (53) carries said upper clamping part (50) and provides a bearing allowing said upper clamping part (50) together with said lower clamping part (46) to rotate about a common axis (A) relative to said further structure (53), preferably driven by motor (M).

8. The conveying device (1) of any of the previous claims, said clamping parts (46, 50) being circular discs.

9. The conveying device (1) of any of the previous claims, including a controller (2) for activating said reorienting device (40) to turn said clamped trays (5) by a set angle about said axis (A) and to then release said trays (5) by adjustment of said gap width.

10. A method of operating the conveying device (1) of any of the previous claims, comprising the steps of activating said reorienting device (40) to turn said clamped trays (5) by a set angle about said axis (A) and then releasing said trays (5) by adjustment of said gap width, wherein said conveyor (20) is moving at a constant speed.

## Patentansprüche

1. Fördervorrichtung (1) zum Fördern und Neuausrichten von Schalen (5), wobei die Schalen (5) jeweils einen Boden (6) aufweisen, der mit einer aufrechten Umfangsseitenwand (7) mit einer nach außen hervorstehenden Umfangskante (8) verbunden ist, wobei die Fördervorrichtung (1) Folgendes beinhaltet:
a) einen Förderer (20) zum kontinuierlichen Fördern der Schalen (5) nacheinander, wobei der Boden (6) jeder Schale (5) durch den Förderer (20) gestützt wird,
b) eine über dem Förderer (20) angeordnete Neuausrichtungsvorrichtung (40) zum Wenden der Schalen (5), **gekennzeichnet dadurch, dass**
die Neuausrichtungsvorrichtung (40) ein unteres Klemmteil (46) und ein oberes Klemmteil (50) umfasst,
- sich ein Spalt (42) mit einstellbarer Spaltbreite zwischen dem oberen und dem unteren Klemmteil (46, 50) auf einer Höhe über dem Förderer (20) befindet,
- wobei das obere und das untere Klemmteil (46, 50) dazu angeordnet sind, in dem Spalt (42) eine Länge der Umfangskante (8) jeder Schale (5) aufzunehmen, die durch den Förderer (20) zu der Neuausrichtungsvorrichtung (40) gefördert wird,
wobei die Neuausrichtungsvorrichtung (40) das Wenden durch eine Gelenkdrehung um eine gemeinsame Achse (A) des oberen und des unteren Klemmteils (46, 50) ausführt, wobei gleichzeitig die aufgenommene Länge der Umfangskante (8) durch Einstellung der Spaltbreite vorübergehend in den Spalt (42) eingeklemmt wird,
wobei die Neuausrichtungsvorrichtung (40) dazu konfiguriert ist, die Klemmung der aufgenommenen Länge der Umfangskante (8) durch Einstellung der Spaltbreite nach der Gelenkdrehung um die gemeinsame Achse (A) zu lösen.

2. Fördervorrichtung (1) nach Anspruch 1, wobei der Förderer (20) dazu konfiguriert ist, sich mit einer konstanten Geschwindigkeit zu bewegen.

3. Fördervorrichtung (1) nach Anspruch 1 oder 2, wobei der Förderer (20) ein Bandförderer ist, der ein erstes Ende (22) stromaufwärts der Neuausrichtungsvorrichtung (40) und ein zweites Ende (21) stromabwärts der Neuausrichtungsvorrichtung (40) aufweist.

4. Fördervorrichtung (1) nach einem der vorhergehenden Ansprüche, die einen Rahmen (F), der die Neuausrichtungsvorrichtung (40) stützt, beinhaltet und zum einstellbaren Positionieren der Höhe des Spalts (42) über dem Förderer (20) und/oder zum einstellbaren Positionieren des Spalts (42) in einer Richtung quer zu dem Förderer (20) konfiguriert ist.

5. Fördervorrichtung (1) nach einem der vorhergehenden Ansprüche, umfassend einen Motor (M) zum Bereitstellen der Gelenkdrehung.

6. Fördervorrichtung (1) nach einem der vorhergehenden Ansprüche, die einen Antrieb (D) beinhaltet, durch den eines oder beide der Klemmteile (46, 50) entlang der Gelenkdrehachse (A) der Klemmteile (46, 50) zur Einstellung der Spaltbreite bewegbar ist/sind, bevor die Gelenkdrehung eingeleitet wird.

7. Fördervorrichtung (1) nach einem der vorhergehenden Ansprüche, wobei das obere Klemmteil (50) das untere Klemmteil (46) trägt, indem es eine rohrförmige Struktur (52) aufweist, die einen Stift (47) aufnimmt, der an dem unteren Klemmteil (46) angebracht ist, wobei die rohrförmige Struktur (52) es dem Stift (47) ermöglicht, sich nur über einen zuvor festgelegten Abstand entlang der Länge davon zu bewegen, vorzugsweise ohne eine relative Drehung des Stifts (47) in Bezug auf die rohrförmige Struktur (52) zuzulassen, und/oder wobei eine weitere Struktur (53) das obere Klemmteil (50) trägt und ein Lager bereitstellt, das zulässt, dass sich das obere Klemmteil (50) zusammen mit dem unteren Klemmteil (46) um eine gemeinsame Achse (A) relativ zu der weiteren Struktur (53), vorzugsweise angetrieben durch den Motor (M), dreht.

8. Fördervorrichtung (1) nach einem der vorhergehenden Ansprüche, wobei die Klemmteile (46, 50) kreisförmige Scheiben sind.

9. Fördervorrichtung (1) nach einem der vorhergehenden Ansprüche, die eine Steuerung (2) zum Aktivieren der Neuausrichtungsvorrichtung (40) beinhaltet, um die eingeklemmten Schalen (5) um einen festgelegten Winkel um die Achse (A) zu drehen und dann die Schalen (5) durch Einstellung der Spaltbreite freizugeben.

10. Verfahren zum Betreiben der Fördervorrichtung (1) nach einem der vorhergehenden Ansprüche, umfassend die Schritte des Aktivierens der Neuausrichtungsvorrichtung (40), um die eingeklemmten Schalen (5) um einen festgelegten Winkel um die Achse (A) zu drehen, und dann des Freigebens der Schalen (5) durch Einstellung der Spaltbreite, wobei sich der Förderer (20) mit einer konstanten Geschwindigkeit bewegt.

## Revendications

1. Dispositif de transport (1) permettant de faire avancer et de réorienter des plateaux (5), lesdits plateaux (5) comprenant chacun un fond (6) connecté à une paroi latérale périphérique verticale (7) avec un bord périphérique faisant saillie vers l'extérieur (8), le dispositif de transport (1) comportant :
a) un convoyeur (20) pour faire avancer en continu lesdits plateaux (5) les uns après les autres, ledit fond (6) de chaque plateau (5) étant supporté par ledit convoyeur (20),
b) un dispositif de réorientation (40) agencé au-dessus dudit convoyeur (20), pour faire tourner lesdits plateaux (5), **caractérisé par**
ledit dispositif de réorientation (40) comprenant une partie de serrage inférieure (46) et une partie de serrage supérieure (50),
- un espace (42) de largeur d'espace réglable entre lesdites parties de serrage supérieure et inférieure (46, 50) étant à un niveau au-dessus dudit convoyeur (20),
- lesdites parties de serrage supérieure et inférieure (46, 50) étant agencées pour recevoir dans ledit espace (42) une longueur dudit bord périphérique (8) de chaque plateau (5) avancé vers ledit dispositif de réorientation (40) par ledit convoyeur (20),
ledit dispositif de réorientation (40) effectuant ledit retournement par une rotation conjointe autour d'un axe commun (A) desdites parties de serrage supérieure et inférieure (46, 50), simultanément avec ladite longueur reçue dudit bord périphérique (8) étant temporairement serrée dans ledit espace (42) par réglage de ladite largeur d'espace,
ledit dispositif de réorientation (40) étant configuré pour libérer ledit serrage de ladite longueur reçue dudit bord périphérique (8) par réglage de ladite largeur d'espace après ladite rotation conjointe autour dudit axe commun (A).

2. Dispositif de transport (1) selon la revendication 1, ledit convoyeur (20) étant configuré pour se déplacer à une vitesse constante.

3. Dispositif de transport (1) selon la revendication 1 ou 2, ledit convoyeur (20) étant un convoyeur à bande ayant une première extrémité (22) en amont dudit dispositif de réorientation (40) et une seconde extrémité (21) en aval dudit dispositif de réorientation (40).

4. Dispositif de transport (1) selon l'une quelconque des revendications précédentes, comprenant un cadre (F) supportant ledit dispositif de réorientation (40), et configuré pour un positionnement réglable dudit niveau dudit espace (42) au-dessus dudit convoyeur (20) et/ou pour un positionnement réglable dudit espace (42) dans une direction transversale audit convoyeur (20).

5. Dispositif de transport (1) selon l'une quelconque des revendications précédentes, comprenant un moteur (M) pour assurer ladite rotation conjointe.

6. Dispositif de transport (1) selon l'une quelconque des revendications précédentes, comportant un entraînement (D) par lequel une ou les deux desdites parties de serrage (46, 50) sont mobiles le long dudit axe (A) de rotation conjointe desdites parties de serrage (46, 50), pour ledit réglage de ladite largeur d'espace avant que ladite rotation conjointe ne soit initiée.

7. Dispositif de transport (1) selon l'une quelconque des revendications précédentes, dans lequel ladite partie de serrage supérieure (50) porte ladite partie de serrage inférieure (46) en ayant une structure tubulaire (52) recevant une broche (47) fixée à la partie de serrage inférieure (46), ladite structure tubulaire (52) permettant à ladite broche (47) de se déplacer uniquement sur une distance prédéfinie le long de sa longueur, de préférence sans permettre une rotation relative de ladite broche (47) par rapport à ladite structure tubulaire (52), et/ou dans lequel une autre structure (53) porte ladite partie de serrage supérieure (50) et fournit un palier permettant à ladite partie de serrage supérieure (50) conjointement avec ladite partie de serrage inférieure (46) de tourner autour d'un axe commun (A) par rapport à ladite autre structure (53), de préférence entraînée par un moteur (M).

8. Dispositif de transport (1) selon l'une quelconque des revendications précédentes, lesdites parties de serrage (46, 50) étant des disques circulaires.

9. Dispositif de transport (1) selon l'une quelconque des revendications précédentes, comportant un dispositif de commande (2) pour activer ledit dispositif de réorientation (40) pour faire tourner lesdits plateaux serrés (5) selon un angle défini autour dudit axe (A) et pour ensuite libérer lesdits plateaux (5) par réglage de ladite largeur d'espace.

10. Procédé de fonctionnement du dispositif de transport (1) selon l'une quelconque des revendications précédentes, comprenant les étapes d'activation dudit dispositif de réorientation (40) pour faire tourner lesdits plateaux serrés (5) selon un angle défini autour dudit axe (A) puis à libérer lesdits plateaux (5) par réglage de ladite largeur d'espace, dans lequel ledit convoyeur (20) se déplace à une vitesse constante.
